# EUROPÄISCHE PATENTANMELDUNG

(11) **EP 2 243 345 A1**
(43) Veröffentlichungstag der Anmeldung: **27.10.2010**
(21) Anmeldenummer: 10003974.2
(22) Anmeldetag: 15.04.2010
(51) Int. Cl.: A01C 3/06

(54) **Fahrbare Einrichtung zur Verteilung von streufähigem Gut, wie Dünger, Gülle, Abfällen**

(30) Priorität: 23.04.2009 IT BZ20090018
(71) Anmelder: Stolzlechner, Klaus, 39030 Valle Aurina (BZ) (IT)
(72) Erfinder: Stolzlechner, Klaus, 39030 Valle Aurina (BZ) (IT)
(74) Vertreter: Ausserer, Anton

(57) **Zusammenfassung**

Beschrieben wird eine fahrbare Einrichtung zur Verteilung von streufähigem Gut, wie Dünger, Gülle, Abfällen, umfassend ein Fahrgestell, einen am Fahrgestell befestigten und das streufähige Gut enthaltenden Speicher, ein mit dem Inneren des Speichers verbundenes Auszugsmittel, ein mit dem Auszugsmittel verbundenes Gehäuse und einen Auswurfrotor, der fähig ist, das streufähige Gut mindestens in eine Richtung zu schleudern.

Gemäß der Erfindung umfasst sie überdies ein dem Auswurfrotor (8) zuordenbares Gebläse (8), das die Luft unterhalb eines vom Auswurfrotor erzeugten Strahl in eine Richtung schleudert, die in einer Ebene liegt, die die Strahlrichtung des streufähigen Gutes zur Unterstützung des Strahls des streufähigen Gutes enthält.

## Beschreibung

Die vorliegenden Erfindung bezieht sich auf eine fahrbare Einrichtung zur Verteilung von streufähigem Gut, wie Dünger, Gülle, Abfällen gemäß dem Oberbegriff des Anspruchs 1.

Eine Einrichtung dieser Art ist beispielsweise aus den Veröffentlichungen CH 682593 und CH 691788 bekannt.

In diesen Veröffentlichungen wird im Wesentlichen eine Einrichtung zur Verteilung von Dünger, Gülle oder pflanzlichen Abfällen auf den Feldern beschrieben, mit einer auf einem Fahrgestell befestigten, einen Laderaum für das Gut bildenden Ladebrücke, wobei dem Laderaum eine Fördervorrichtung zugeordnet ist, die das streufähige Gut einer Verteilervorrichtung zuführt, die endseitig an der Ladebrücke angeordnet ist, wobei die Verteilervorrichtung als Fräsvorrichtung, die zum verteilenden Gut gerichtet ist und quer zur Zuführrichtung drehbar betätigt wird, und als Auswurfvorrichtung ausgebildet ist, die nach der Fräsvorrichtung angeordnet ist.

Die Ausfuhrvorrichtung ist als Auswurfrotor ausgebildet, der auf einer Achse drehbar angeordnet ist, die zur Längsachse der fahrbaren Einrichtung parallel ist.

Bei fahrbaren Einrichtungen dieser Art zeigt sich das Problem, dass das zu verteilende Gut wegen der Schwerkraft sich rasch auf den Boden niederschlägt, wobei so das streufähige Gut mit einer nicht zufrieden stellenden Breite in Fahrtrichtung der Einrichtung verteilt wird. Dieser Nachteil wirkt sich vor allem im Gebirge negativ aus, da sich die Bodenneigung auf abschüssigem Gelände mit der Wurfweite des ausgeworfenen Gutes im Gefälle überschneidet, wobei so die Breite des bestreuten Geländes erheblich herabgesetzt wird.

Die Aufgabe der Erfindung liegt daher darin, den Nachteil von Güllestreuern der herkömmlichen Art zu vermeiden, wobei gesucht wird, eine Verteilungsbreite zu erhalten, die gegenüber der Verteilungsbreite erheblich erhöht wird, die mit fahrbaren Einrichtungen bekannter Art erhalten wird.

Diese Aufgabe wird durch eine fahrbare Einrichtung zur Verteilung von streufähigem Gut, wie Dünger, Gülle, Abfallen durch den kennzeichnenden Teil des Anspruchs 1 gelöst.

Mit dem Vorschlag, dem Auswurfmittel des streufähigen Gutes einen Ventilator zuzuordnen, der den Strahl von streufähigem Gut unterstützt, wird eine Art von Luftpolster geschaffen, der mindestens teilweise den Gutstrahl unterstützt, der dadurch weniger rasch auf den Boden fällt. So wird die Wurfweite mit großem Vorteil insbesondere im Gebirge erhöht.

Gemäß einer bevorzugten Ausführungsform, ist die Luftauswurfdüse des Ventilators schwenkbar. Somit kann die Luftauswurfrichtung gegenüber der Auswurfrichtung des streufähigen Gutes geändert werden. Gleichzeitig wird es auch ermöglicht, einen optimalen Winkel zwischen den beiden Richtungen, insbesondere Null zu finden.

Weitere Merkmale und Einzelheiten der fahrbaren Einrichtung zur Verteilung von streufähigem Gut, wie Gülle, Dünger, Abfällen gemäß der Erfindung gehen aus den Ansprüchen und aus der folgenden Beschreibung einer bevorzugten, in der beigefügten Zeichnung dargestellten Ausführungsform hervor. Es zeigen,

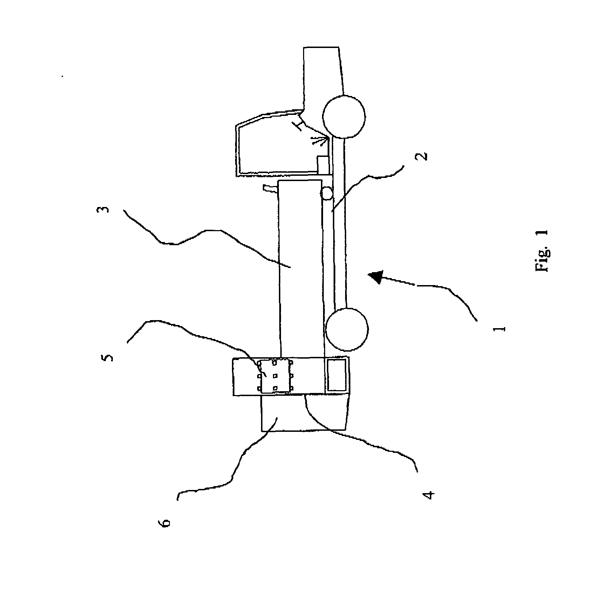

- Figur 1: schematisch eine Seitenansicht einer fahrbaren Einrichtung gemäß der Erfindung,
- Figur 2: eine hintere Stirnansicht der Einrichtung nach Figur 1 in einer ersten Betriebsstellung, und
- Figur 3: dieselbe Einrichtung in einer zweiten Betriebsstellung.

In den Figuren ist mit der Bezugsziffer 1 in seiner Gesamtheit ein Güllestreuer angegeben.

Der Güllestreuer 1 umfasst ein fahrbares Mittel 1, das einen Speicher 3 trägt. In diesem ist das streufähige Gut enthalten. Diese wird von einer Fördereinrichtung, beispielsweise in der Form einer nicht dargestellten Schnecke, in Richtung einer Auszugseinheit 4 gefördert. Auf bekannte Art und Weise könnte auch eine Fräsvorrichtung zwischengeschaltet sein, die das streufähige Gut zerkleinert bzw. das Gut streufähig gestaltet. Diese Auszugseinheit 4 umfasst einen Auswurfrotor 5, der in einem Gehäuse 6 mit seiner nach oben geneigten Auswurfdüse aufgenommen ist.

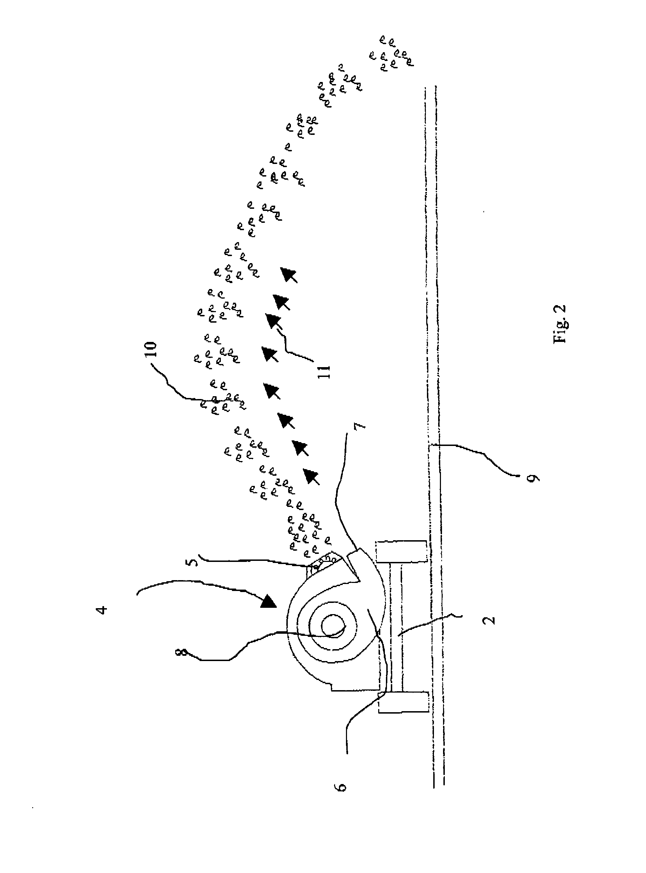

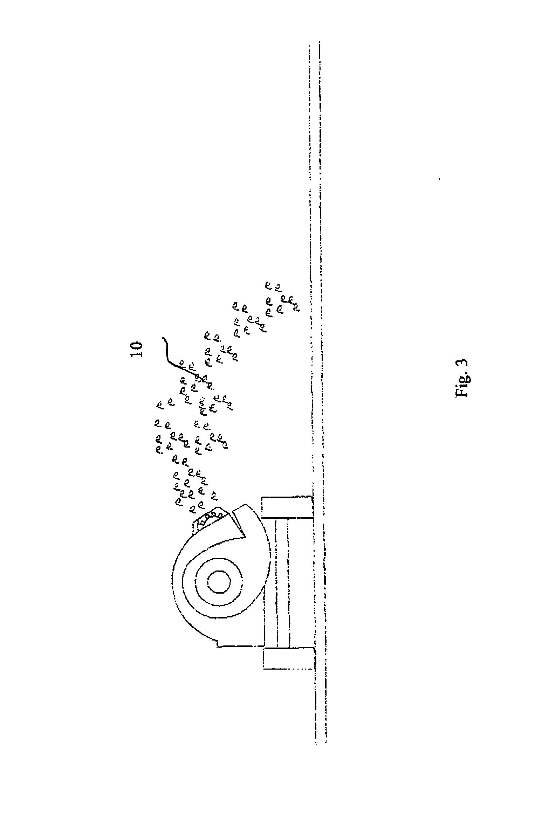

Gemäß der Erfindung ist dem Auswurfrotor 5 ein Ventilator 8 mit einer Luftdruckdüse 7 derart zugeordnet, dass die Richtung des ausgeworfenen, streufähigen Gutes im Wesentlichen in einer Ebene enthalten ist, die die Luftausstoßrichtung enthält. So kann das streufähige Gut auf dem Gelände 9 gestreut werden, indem es teilweise vom durch die Düse erzeugten Luftpolster getragen wird. In Figur 2 und 3 ist gezeigt, wie das streufähige Gut 10 mit verschiedenen Breiten auf dem Gelände gestreut wird, insbesondere mit einer sehr niedrigen Breite, wenn die vom Ventilator 6 ausgestoßene Luft wenig ist oder mit wenig Kraft ausgestoßen wird oder geradezu Null ist. Es sind verschiedene Varianten und vor allem Einstellmöglichkeiten der Druckluftdüse gegenüber der Ausstoßrichtung des streufähigen Gutes möglich.

## Patentansprüche

1. Fahrbare Einrichtung zur Verteilung von streufähigem Gut, wie Dünger, Gülle, Abfällen, umfassend ein Fahrgestell, einen am Fahrgestell befestigten und das streufähige Gut enthaltenden Speicher, ein mit dem Inneren des Speichers verbundenes Auszugsmittel, ein mit dem Auszugsmittel verbundenes Gehäuse und einen Auswurfrotor, der fähig ist, das streufähige Gut mindestens in eine Richtung zu schleudern, **dadurch gekennzeichnet, dass** sie überdies ein dem Auswurfrotor (8) zuordenbares Gebläse (8) umfasst, das die Luft unterhalb eines vom Auswurfrotor erzeugten Strahl in eine Richtung schleudert, die in einer Ebene liegt, die die Strahlrichtung des streufähigen Gutes zur Unterstützung des Strahls des streufähigen Gutes enthält.

2. Einrichtung nach Anspruch 1, **dadurch gekennzeichnet, dass** die Düse des Gebläses schwenkbar ist.

3. Einrichtung nach Anspruch 1, **dadurch gekennzeichnet, dass** die Düse des Gebläses im Wesentlichen parallel zur Ausstoßrichtung des streufähigen Gutes schwenkbar ist.
